(19) Europäisches Patentamt
European Patent Office
Office européen des brevets

(11) **EP 4 496 237 A1**

(12) **EUROPEAN PATENT APPLICATION**

(43) Date of publication:
**22.01.2025 Bulletin 2025/04**

(21) Application number: **24189653.9**

(22) Date of filing: **19.07.2024**

(51) International Patent Classification (IPC):
**H04B 7/08** (2006.01)　　　**H04L 25/02** (2006.01)

(52) Cooperative Patent Classification (CPC):
**H04B 7/0842; H04L 25/0228**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.07.2023 US 202363514834 P
15.07.2024 US 202418772601**

(71) Applicant: **Mavenir Systems, Inc.
Richardson, TX 75081 (US)**

(72) Inventors:
• **DEMIR, Ali Fatih
Allen, 75093 (US)**
• **YANG, Roy
Buffalo Grove, 60089 (US)**

(74) Representative: **Studio Torta S.p.A.
Via Viotti, 9
10121 Torino (IT)**

(54) **SYSTEMS AND METHODS FOR ENERGY AND FRONTHAUL BANDWIDTH EFFICIENT UPLINK PERFORMANCE IMPROVEMENTS FOR O-RAN-BASED RADIO ACCESS NETWORKS**

(57) A method for optimizing uplink performance of Open Radio Access Network (O-RAN) system implementing O-RAN split option 7-2x-based uplink (UL) multiple-input multiple-output (MIMO) operation includes: selectively utilizing non-port reduced DMRS symbols and non-port reduced DMRS measurements to mitigate performance degradation of the UL MIMO in conditions involving high mobility for a user equipment (UE) and/or high interference. The non-port reduced DMRS symbols are DMRS symbols from multiple antenna streams before digital beamforming operation, and non-port reduced DMRS measurements are measurements derived from the non-port reduced DMRS symbols. A radio unit (RU) of the O-RAN system i) extracts the non-port reduced DMRS symbols, and ii) transmits the non-port reduced DMRS measurements to a distributed unit (DU) of the O-RAN system. The DU transmits combining and/or digital beamforming matrix elements to the RU for combining and/or digital beamforming matrix application.

FIG. 2

**Description**

BACKGROUND

1. Field of the Invention

The invention is directed to the field of Open Radio Access Network (O-RAN) systems, and relates more particularly to systems and methods to improve the uplink performance of O-RAN-based RANs in an energy-efficient and fronthaul-bandwidth-efficient manner.

2. Description of Related Art

Mobile networks, e.g., 4G and 5G New Radio (NR) networks, include a Radio Access Network (RAN) and a Core Network. The RAN base station provides wireless connectivity between the user equipment (UE), e.g., a mobile phone, and the Core Network. Traditionally, the RAN is an integrated unit developed by a single vendor. Although the traditional RAN provides enhanced capabilities with proprietary solutions, mobile network operators generally prefer a more diverse vendor ecosystem. Therefore, Open RAN (O-RAN) standard is being developed by the O-RAN Alliance to create a multi-vendor RAN solution with promised benefits of supply chain diversity, network flexibility, lower cost, and new capabilities leading to increased competition and further innovation.

With the O-RAN standard, the RAN is disaggregated into three main component blocks, i.e., radio unit (RU), distributed unit (DU), and centralized unit (CU). The O-RAN alliance standardizes the protocols and interfaces between these units. The radio frequency (RF) signals are transceived, amplified, and digitized in the RU. The DU and CU are the computation parts of the base station, sending the digitalized signal into the mobile network. The specific RAN functionalities that correspond to each of these three component entities are determined by the functional split points. In the O-RAN split option 7-2x, the physical (PHY) layer functions are distributed between the RU and DU, i.e., an O-RU based on the split option 7-2x architecture can perform the low PHY functionalities (e.g., FFT/IFFT and beamforming), and O-DUs perform the high PHY functionalities (e.g., channel estimation, equalization, demodulation, etc.). The O-RU is connected to the O-DU via the fronthaul (FH) interface.

In this section, a brief background on the O-RAN FH messages will be provided. There are four planes specified in the O-RAN specification, i.e., user-plane (U-plane), control plane (C-plane), synchronization plane (S-plane), and management plane (M-plane). The M-plane specifies the management plane protocols used over the fronthaul interface linking the O-RU (O-RAN Radio Unit) with other management plane entities, which may include the O-DU (O-RAN Distributed Unit), the O-RAN-defined Service Management and Orchestration (SMO) functionality as well as other generic Network Management Systems. In contrast to the C-plane, the M-Plane refers to non-real-time management operations between the O-DU and the O-RU. Specifically, the Lower-Layer Split M-plane facilitates the initialization, configuration, and management of the O-RU to support the specified functional split.

The main purpose of the C-plane messages is to transmit data-associated control information required for the processing of user data (e.g., scheduling and beamforming commands). These messages are sent separately for DL-related commands and UL-related commands. A common frame format is used for C-Plane messages, consisting of a transport layer and an application layer. The application layer, which is within the transport layer payload, consists of a common header for time reference, followed by information and parameters dependent and specific to the Section Type in use. Multiple sets of section data of the same Section Type value can be lined up one after another within the payload. To minimize packet rate over the interface, a transmitter should fill messages with as many subsequent sections (with or without sequential section IDs) as possible.

One of the main technologies that use the O-RAN split option 7-2x specifications is 4G/5G massive multiple input, multiple output (mMIMO). In a single-user MIMO (SU-MIMO) configuration, the gNB serves a single user on a set of time-frequency resources, whereas in a multi-user MIMO (MU-MIMO) configuration, the gNB serves multiple users on the same time-frequency resources for improved spectral efficiency. In the uplink (UL) direction (i.e., from UE to gNB), UEs send the SRS signal over the air interface, and then it is captured by the O-RU and conveyed to the O-DU via the fronthaul interface in a non-delay managed (NDM) manner. Using the SRS signal, the O-DU estimates the UL channel of the UEs, using which the gNB performs user pairing (in the case of MU-MIMO) and calculates combining/digital beamforming matrix for the scheduled user(s). The O-DU sends the combining/digital beamforming matrix elements and/or weights to the O-RU, which in return applies these elements to the frequency-domain PUSCH IQ samples received at a later time and sends the resulting IQ samples to the O-DU for the rest of PHY processing. One aspect of the combining operation (using the combining/digital beamforming matrix) at the O-RU is that it enables the O-RU to reduce the number of streams transferred from the O-RU to the O-DU to a value smaller than the number of receiver (RX) antennas. It is crucial in mMIMO systems, where the number of receiver (RX) antennas is large, and transferring all received streams for PUSCH to O-DU leads to significant and prohibitive fronthaul bandwidth consumption.

Although split option 7-2x has numerous advantages, e.g., interface simplicity, future-proofness, and lower RU complexity, the uplink performance of the split option 7-2x may degrade in specific scenarios, such as high-mobility and high-interference scenarios. This problem is particularly important in massive MIMO systems where the number of receiver antennas is large. In the below sections, performance degradations in high-mobility and high-interference scenarios are discussed.

Performance degradation in high-mobility scenarios: The main reason for performance degradation in a high-mobility scenario is channel aging due to outdated SRS channel estimates in combining/digital beamforming matrix calculation at the O-DU. Specifically, the SRS signals are sent with a relatively long periodicity (e.g., 10s of milliseconds). By the time the O-RU applies the combining/digital beamforming matrix elements to the PUSCH symbols, these matrix elements may be inaccurate because the SRS-based channel estimates can be outdated. In other words, the channel gains between the UEs and the gNB at the time PUSCH is received might not be reflected accurately by the SRS signals, which inaccuracy causes interference resulting in throughput degradation during the combining process in the UL chain.

Performance degradation in the presence of inter-cell interference (ICI): The main reason for performance degradation in a high-ICI environment is signal dimension reduction via combining/digital beamforming matrix application at O-RU. More specifically, squeezing the desired signals and interference signals into smaller dimensions can cause performance degradation of the interference rejection methods at the O-DU.

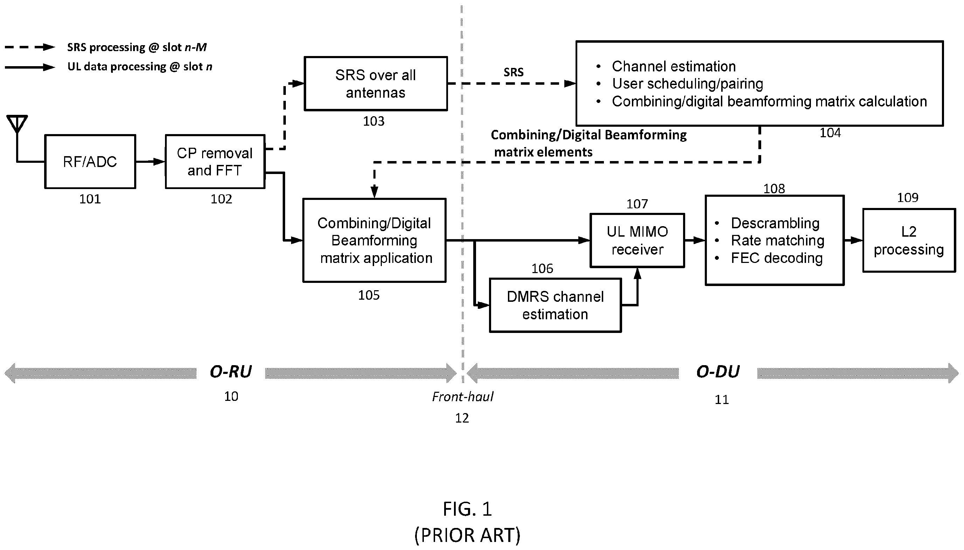

FIG. 1 shows a block diagram of the current O-RAN 7-2x-based UL mMIMO system with an O-RU 10 that has the capability of digital beamforming. Considering weight-based dynamic beamforming (WDBF), the beamforming weights are calculated at an O-DU 11 through SRS channel estimates, and these weights are transferred to the O-DU via the fronthaul. Afterward, the digital beamforming operation is performed at the O-RU using the received weights from the O-RU to reduce the fronthaul bandwidth (FHBW). In this manner, the signal dimension is reduced to $N_L$ streams from $N_R$ antennas, where $N_R \gg N_L$ for mMIMO O-RAN systems. Outdated SRS channel estimates and reduced signal dimension lead to throughput performance degradation in high mobility and interference environments.

As shown in FIG. 1, the current O-RAN 7-2x-based UL mMIMO system includes the O-RU 10 and the O-DU 11 communicating over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; and block 105, for handling combining and/or digital beamforming matrix application. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 1, the signal flow for SRS processing (starting from block 102 and further involving blocks 103, 104 and 105) is shown by dashed lines, and the signal flow for UL data processing (involving blocks 101, 102, and 105-109) is shown by solid lines. For SRS processing, SRS is transmitted from block 103 to block 104, which in turn transmits combining and/or digital beamforming matrix elements to block 105.

In this section, several approaches which have been proposed to address the aforementioned problems will be discussed. Those approaches which do not require changing the existing O-RAN 7-2x standard are referred to as "7-2x standard-compliant approaches", and those approaches which require changing the existing O-RAN 7-2x standard are referred to as "7-2x non-standard compliant approaches".

7-2x Standard Compliant Approaches: One approach to mitigate performance degradation in high mobility scenarios is to configure SRS transmissions with shorter periodicities. However, shorter SRS periodicity may decrease the SRS capacity, i.e., the number of UEs that can be configured to transmit SRS, because more resources are occupied by each UE for SRS transmission. In addition, in a time-division duplex (TDD) system, there are certain limitations on SRS periodicity due to the TDD frame structure adopted by the system.

Another approach to mitigate the performance degradation in high mobility scenarios is to predict the UL channel of the PUSCH/PUCCH slot at the DU based on the UL channels of a number of previous SRS transmissions. In addition to the computational complexity of the underlying prediction algorithm, this approach is hampered by limitations on performance improvement depending on UE speeds.

For scenarios with inter-cell interference, typical O-DU processing uses a minimum mean-squared error receiver with interference rejection combining (MMSE-IRC) to mitigate the impact of the interference. However, since the O-DU has access to the compressed PUSCH signal transferred from the O-RU, the performance of MMSE-IRC may be degraded compared to a typical 7-3 split receiver wherein MMSE-IRC is computed based on and applied to the full-dimension signal.

7-2x Non-Standard Compliant Approaches: One non-standard compliant approach is moving DMRS channel estimation and beamforming weight calculation (and also equalization) operations to the O-RU from the O-DU with a new split option. In this way, the beamforming weights can be calculated using the most recent DMRS channel estimates, and the SRS channel aging issue is solved. Furthermore, the application of a whiting filter through DMRS channel estimates at O-RU improves the MMSE-IRC as well. However, this approach increases the O-RU's computational complexity and energy consumption, where computational resources and energy consumption are more precious and critical.

Another non-standard compliant approach is extracting the DMRS at the O-RU and calculating the beamforming weights at the O-DU using the most recent DMRS channel estimates. Although this approach solves the aforementioned issues, this approach can introduce a significant latency in the process, considering PUSCH is delay-managed (DM) traffic. In addition, sending NDM DMRS for all users increases the FH bit rate significantly, even though it might not be required for all scheduled UEs in the network.

Accordingly, there is a need for a system and a method to improve uplink performance for O-RAN-based RANs in an energy-efficient and fronthaul-bandwidth-efficient manner.

SUMMARY

Accordingly, it is desired to provide a system and method to improve uplink performance for O-RAN-based RANs in an energy-efficient and fronthaul-bandwidth-efficient manner.

According to an example embodiment, C-plane message modifications and M-plane enhancements are provided to enable the improved uplink performance for O-RAN-based RANs in an energy-efficient and fronthaul-bandwidth-efficient manner.

According to an example embodiment, "non-port reduced DMRS symbols" and "non-port reduced DMRS measurements" are utilized intelligently to solve the performance degradation issues of the O-RAN 7-2x-based UL mMIMO in challenging conditions, e.g., high mobility and high interference.

According to an example embodiment of the method, dynamically enabling and/or disabling advanced PHY features at the O-RU and/or the O-DU is facilitated by utilizing "non-port reduced DMRS symbols" and "non-port reduced DMRS measurements," depending on the need of the network.

According to an example embodiment, efficient transmissions of "non-port reduced DMRS symbols" and "non-port reduced DMRS measurements" are facilitated for O-RAN 7-2x-based UL mMIMO systems.

BRIEF DESCRIPTION OF THE DRAWINGS

FIG. 1 shows a block diagram of the current O-RAN 7-2x-based UL mMIMO system with an O-RU that has the capability of digital beamforming.

FIG. 2 shows a block diagram of an example embodiment of an O-RAN 7-2x-based UL mMIMO O-RAN system with an O-RU that has the capability of transferring "non-port reduced DMRS symbols" and "non-port reduced DMRS measurements" to O-DU.

FIG. 3 shows a block diagram of an example embodiment of a UL mMIMO O-RAN system with an O-RU that has DMRS extraction and DMRS processing capabilities (which O-RU is referred to as Cat C1 O-RU in the present specification).

FIG. 4 shows a block diagram of an example embodiment of a UL mMIMO O-RAN system with an O-RU that has DMRS extraction, DMRS processing, and equalization capabilities (which O-RU is referred to as Cat C2 O-RU in the present specification).

FIG. 5 shows a block diagram of an example embodiment of a UL mMIMO O-RAN system with an O-RU that has DMRS extraction, DMRS processing, equalization, and demodulation capabilities (which O-RU is referred to as Cat C3 O-RU in the present specification).

FIG. 6 shows a block diagram of an example embodiment of a UL mMIMO O-RAN system with an advanced Cat C1 O-RU for improved energy and fronthaul bandwidth (FHBW) efficiency.

FIG. 7 shows a block diagram of an example embodiment of a UL mMIMO O-RAN system with an advanced Cat C2 O-RU for improved energy and fronthaul bandwidth (FHBW) efficiency.

FIG. 8 shows a block diagram of an example embodiment of a UL mMIMO O-RAN system with an advanced Cat C3 O-RU for improved energy and fronthaul bandwidth (FHBW) efficiency.

FIG. 9 illustrates DMRS configuration parameters for DMRS configuration Type 1, which can support up to 8 antenna ports.

FIG. 10 illustrates DMRS configuration parameters for DMRS configuration Type 2, which can support up to 12 antenna ports.

FIG. 11a illustrates DMRS configuration parameters for an example DMRS mapping for DMRS Type 1, PUSCH mapping Type A.

FIG. 11b illustrates DMRS configuration parameters for an example DMRS mapping for DMRS Type 2, PUSCH mapping Type A.

FIG. 12a illustrates DMRS configuration parameters for an example DMRS mapping for DMRS Type 1, PUSCH mapping Type B.

FIG. 12b illustrates DMRS configuration parameters for an example DMRS mapping for DMRS Type 2, PUSCH mapping Type B.

FIG. 13a illustrates DMRS configuration parameters for an example DMRS allocations with one additional position, e.g., for a high-mobility case, for DMRS Type 2, PUSCH mapping Type A.

FIG. 13b illustrates DMRS configuration parameters for an example DMRS allocations with three additional positions, e.g., for a high-mobility case, for DMRS Type 2, PUSCH mapping Type A.

DETAILED DESCRIPTION

According to an example embodiment, the performance of O-RAN 7-2x-based UL mMIMO O-RAN systems is improved with the usage of non-port reduced DMRS symbols and non-port reduced DMRS measurements. The term "non-port reduced DMRS symbols" refers to the DMRS symbols from all (multiple) antenna streams before the digital beamforming operation. In addition, the term "non-port reduced DMRS measurements" refers to the measurements and/or estimations that are derived from the "non-port reduced DMRS symbols," e.g., measurements and/or estimations such as "signal-to-noise-plus-interference" and/or "UE timing advance" estimations. "Non-port reduced DMRS symbols" and "non-port reduced DMRS measurements" can be utilized to improve the performance on both the O-RU and the O-DU sides. For example, beamforming weights can be calculated using the "non-port reduced DMRS symbols" either at the O-RU or the O-DU.

Computational complexity and power consumption are critical for mMIMO O-RAN systems (especially at O-RU). Accordingly, the capability to selectively disable the usage of "non-port reduced DMRS symbols" and "non-port reduced DMRS measurements" (e.g., when they are not needed) needs to be provided. Example scenarios in which "non-port reduced DMRS symbols" and "non-port reduced DMRS measurements" can be disabled are low mobility environments and low interference environments. Disabling/turning off their exploitation for various purposes can increase the "energy efficiency" of UL (m)MIMO O-RAN systems.

In addition to the above, fronthaul bandwidth (between O-DU and O-RU) is critical for mMIMO O-RAN systems, and some example techniques are provided to improve the fronthaul bandwidth (FHBW) efficiency while transferring the "non-port reduced DMRS symbols" and "non-port reduced DMRS measurements" from O-RU to O-DU. The following transmission types/techniques are some examples for improving the "FHBW efficiency" of UL (m)MIMO O-RAN systems: i) non-delay managed (NDM) manner (instead of DM manner); ii) on-demand manner (instead of constant throughout the time and frequency); iii) UE-specific manner (instead of transfer for all UEs). Any possible combination of the above transmission types is valid for transferring the "non-port reduced DMRS symbols" and "non-port reduced DMRS measurements" along with any possible combination of O-RU energy-saving techniques. Moreover, to further improve the energy and/or FHBW efficiency, a subset of antennas can be used for "non-port reduced DMRS symbols" and "non-port reduced DMRS measurements."

According to example embodiments, the above-noted techniques can be implemented for both current O-RAN 7-2x-based UL mMIMO systems and future mMIMO O-RAN systems with O-RUs that have advanced PHY capabilities. These example embodiments are explained below, e.g., as Embodiment 1 and Embodiment 2.

Embodiment 1: Energy and FHBW Efficient Uplink Performance Improvement for the Existing mMIMO O-RAN Systems: The uplink performance of (m)MIMO O-RAN systems with 7-2x Split Option can be degraded in challenging conditions such as high mobility environment and high interference environment. The transfer of "non-port reduced DMRS symbols" and "non-port reduced DMRS measurements" from the O-RU to the O-DU can improve the performance of mMIMO O-RAN systems in these challenging conditions.

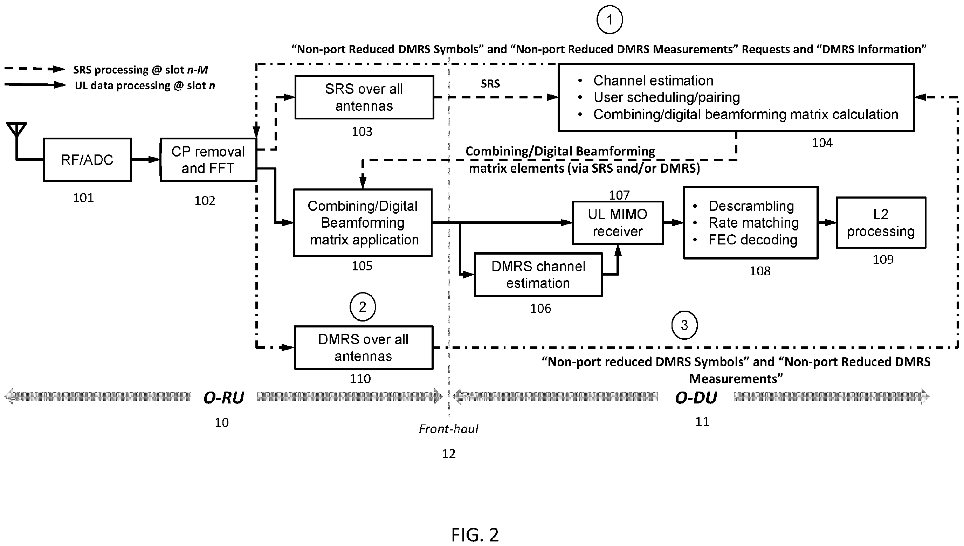

FIG. 2 shows a block diagram of an example embodiment of an O-RAN 7-2x-based UL mMIMO O-RAN system with an O-RU 10 that has the capability of transferring "non-port reduced DMRS symbols" and "non-port reduced DMRS measurements" to O-DU 11. In this example embodiment, O-DU sends the necessary DMRS information, which is required to extract DMRS, to the O-RU, and the O-RU extracts and transfers "non-port reduced DMRS symbols" to O-DU for further processing. In addition, this O-RU can have the capability of performing DMRS measurements and transferring "non-port reduced DMRS measurements" to the O-DU, as well. The O-DU replaces and/or improves the SRS-based beamforming with DMRS-based beamforming to improve uplink performance. Moreover, "port reduced DMRS measurements" and "non-port reduced SRS measurements" at the O-DU can be replaced and/or improved with "non-port reduced DMRS measurements", which are calculated either at the O-DU or at the O-RU.

As shown in FIG. 2, the O-RAN 7-2x-based UL mMIMO system includes the O-RU 10 and the O-DU 11 communicating over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 105, for handling combining and/or digital beamforming matrix application; and block 110 for handling DMRS over all antennas. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 2, the signal flow for SRS processing (starting from block 102 and further involving blocks 103, 104 and 105) is shown by dashed lines, and the signal flow for UL data processing (involving blocks 101, 102, and 105-109) is shown by solid lines. For SRS processing, SRS is transmitted from block 103 to block 104, which in turn transmits combining and/or digital beamforming matrix elements (generated based on SRS and/or DMRS) to block 105.

In addition to the above, FIG. 2 shows a third signal flow, identified by dot-and-dash lines, for "Non-port Reduced DMRS Symbols" and "Non-port Reduced DMRS Measurements". In this third signal flow, the first step is identified by circled number 1, i.e., block 104 transmits to block 110 (via block 102) "Non-port Reduced DMRS Symbols" request and "Non-port Reduced DMRS Measurements" request, as well as DMRS Information. In the second step (identified by circled number 2) of this third signal flow, block 110 processes DMRS over all antennas. In the third step (identified by circled number 3) of this third signal flow, block 110 transmits "Non-port Reduced DMRS Symbols" and "Non-port Reduced DMRS Measurements" to block 104, which in turn can generate combining and/or digital beamforming matrix elements based on i) the SRS from block 103 and/or ii) the received "Non-port Reduced DMRS Symbols" and "Non-port Reduced DMRS Measurements".

Although the transfer of "non-port reduced DMRS symbols" and "non-port reduced DMRS measurements" from the O-RU to the O-DU can improve the performance of mMIMO O-RAN systems, the use of "non-port reduced DMRS symbols" and "non-port reduced DMRS measurements" may not be required in all scenarios. For example, when mobility and/or interference level is low in a network, the above-proposed features and/or techniques may not improve the uplink performance significantly. Therefore, the present example embodiment provides dynamically enabling and/or disabling the above-proposed features and exchange related information between the O-RU and the O-DU via the fronthaul. In other words, turning off some and/or all of the above-proposed features leads to increased energy and/or fronthaul bandwidth efficiency when the above-proposed features do not significantly increase the efficiency. Moreover, in certain scenarios, the above-proposed features can be turned off to reduce the energy and/or fronthaul bandwidth consumption even though the network experiences challenging conditions. In other words, transfer of "non-port reduced DMRS symbols" and/or execution/transfer of "non-port reduced DMRS measurements" can be disabled considering computational complexity/energy consumption/fronthaul bandwidth consumption and throughput performance tradeoffs.

In light of the above discussions, "non-port reduced DMRS symbols" and "non-port reduced DMRS measurements" can be transferred from the O-RU to the O-DU intelligently to reduce the computational complexity and fronthaul bandwidth consumption as follows: i) non-delay managed (NDM) manner (instead of DM manner); ii) on-demand manner (instead of constant throughout the time and frequency); and iii) UE-specific manner (instead of transfer for all UEs). Any possible combination of the above transmission types is valid for transferring the "non-port reduced DMRS symbols" and "non-port reduced DMRS measurements." Moreover, to further improve the energy and/or FHBW efficiency, a subset of antennas can be used for "non-port reduced DMRS symbols" and "non-port reduced DMRS measurements." However, if there are no constraints on the network, these can be transmitted/calculated in a DM manner for all UEs using all antennas in every time slot/PRB, as well.

To enable the proposed features in Embodiment 1 that improve the performance of existing O-RAN 7-2x based UL (m)MIMO systems, the fronthaul signaling mechanism shall be improved with new messages. Examples of these messages for "non-port reduced DMRS symbols" and "non-port reduced DMRS measurements" are presented below in Embodiment 3, along with the messages that enable/disable the proposed features to improve energy and/or FHBW efficiency.

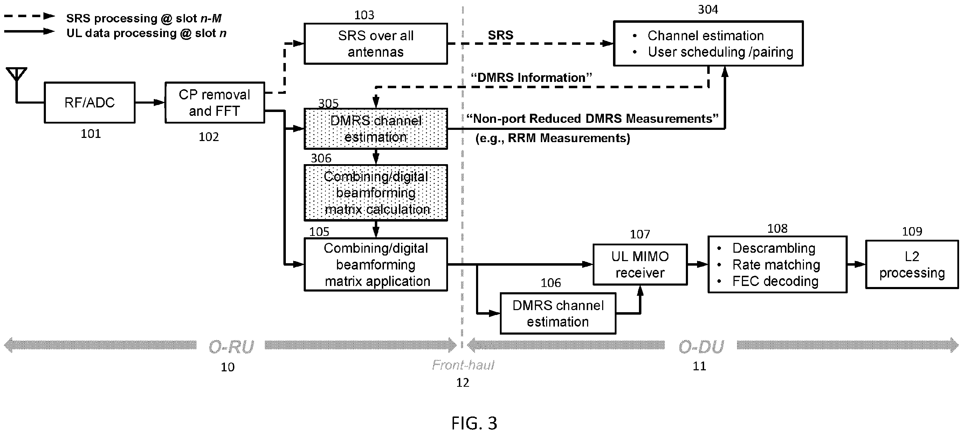

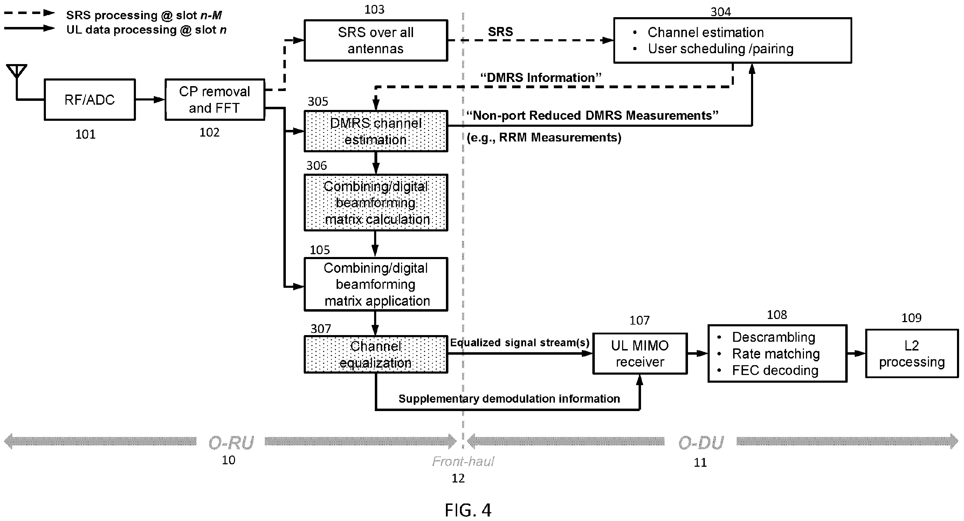

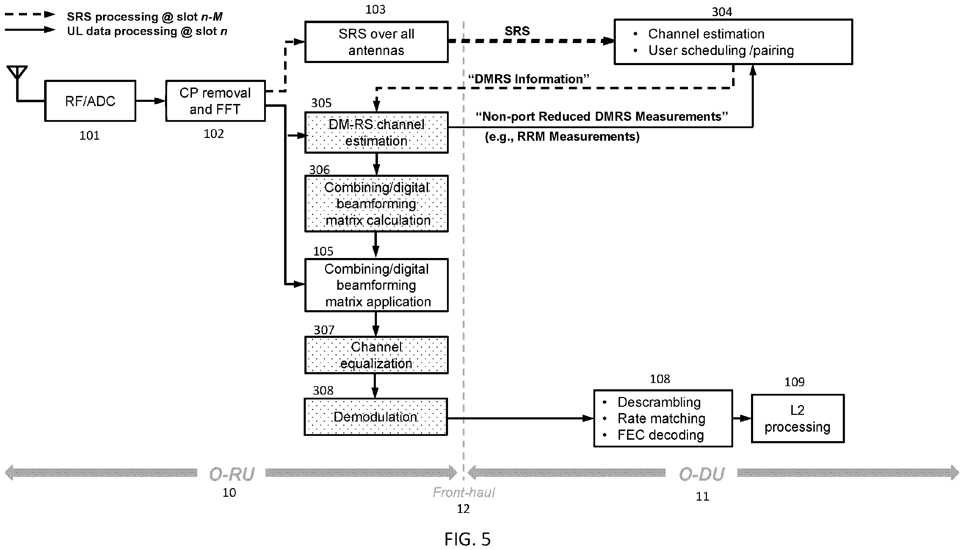

Embodiment 2: Energy and FHBW Efficient Uplink Performance Improvement for the (m)MIMO O-RAN Systems using O-RUs with Advanced PHY Capabilities: O-RUs with advanced physical layer (PHY) capabilities can have DMRS extraction, DMRS processing (e.g., channel estimation and beamforming weights calculation), equalization, and demodulation features. FIGS. 3-5 show the high-level functional block diagrams of potential (m)MIMO O-RAN systems using O-RUs with advanced PHY capabilities. More particularly, FIG. 3 shows a block diagram of an example embodiment of a UL mMIMO O-RAN system with an O-RU that has DMRS extraction and DMRS processing capabilities (which O-RU is referred to as Cat C1 O-RU in the present specification). FIG. 4 shows a block diagram of an example embodiment of a UL mMIMO O-RAN system with an O-RU that has DMRS extraction, DMRS processing, and equalization capabilities (which O-RU is referred to as Cat C2 O-RU in the present specification). FIG. 5 shows a block diagram of an example embodiment of a UL mMIMO O-RAN system with an O-RU that has DMRS extraction, DMRS processing, equalization, and demodulation capabilities (which O-RU is referred to as Cat C3 O-RU in the present specification).

In the example embodiment of the UL mMIMO O-RAN system shown in FIG. 3, the O-DU 11 sends the necessary DMRS information, which is required to extract DMRS, to the O-RU 10 (which is a Cat C1 O-RU). The O-RU 10 extracts and processes DMRS to improve the system performance by replacing and/or improving SRS-based beamforming weights with DMRS-based beamforming weights. In addition, the O-RU 10 can send "non-port reduced DMRS measurements" (which measurements are not possible to calculate at the O-DU 11 with high precision) to the O-DU 11 to further improve the system performance.

As shown in FIG. 3, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; and block 105, for handling combining and/or digital beamforming matrix application. On the O-DU side, the following function modules (blocks) are provided: block 304, for handling channel estimation and user scheduling and/or pairing; block 106, for DMRS channel estimation; block 107, for UL MIMO receiver functionality; block 108, for descrambling, rate matching and FEC decoding; and block 109 for L2 processing. In FIG. 3, the signal flow for SRS processing (starting from block 102 and further involving blocks 103, 304 and 305) is shown by dashed lines, and the signal flow for UL data processing (involving blocks 101, 102, 305-306 and 105-109) is shown by solid lines. For SRS processing, SRS is transmitted from block 103 to block 304, and block 304 performs channel estimation (as well as various measurements) and user scheduling/pairing using the received SRS signal. Also, block 304 transmits DMRS information (which is used for extracting/calculating, e.g., "non-port reduced DMRS symbols" and "non-port reduced DMRS measurements") to block 305. As part of the UL data processing signal flow, output of block 305 can be sent to block 304 (e.g., sending "non-port reduced DMRS measurements", such as RRM measurements), as well as to block 306.

In the example embodiment shown in FIG. 3, the O-RU 10 performs DMRS channel estimation in the block 305 for the main purpose of calculating the beamforming weights. Thereafter, the O-DU 11 performs DMRS channel estimation (in the block 106) to perform equalization and several other channel-estimation-based PHY processing. Even though the DMRS channel estimation is performed twice in the example embodiment shown in FIG. 3, the respective outcomes are not the same, i.e., DMRS channel estimation at the O-RU 10 (in the block 305) carries more information since it is performed based on "non-port reduced DMRS symbols".

In the example embodiment of the UL mMIMO O-RAN system shown in FIG. 4, the O-RU 10 (which is a Cat C2 O-RU) has the capability for DMRS extraction and DMRS processing to improve system performance. The O-RU 10 of FIG. 4 additionally performs equalization and sends the equalized signal stream(s) along with the supplementary demodulation information to the O-DU 11. Moreover, the O-RU 10 can send "non-port reduced DMRS measurements" (which are not possible to calculate at the O-DU 11 with high precision) to the O-DU 11 to further improve the system performance.

As shown in FIG. 4, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; block 105, for handling combining and/or digital beamforming matrix application; and block 307 for handling channel equalization. On the O-DU side, the following function modules (blocks) are provided: block 304, for handling channel estimation and user scheduling and/or pairing; block 107, for UL MIMO receiver functionality; block 108, for descrambling, rate matching and FEC decoding; and block 109 for L2 processing. In FIG. 4, the signal flow for SRS processing (starting from block 102 and further involving blocks 103, 304 and 305) is shown by dashed lines, and the signal flow for UL data processing (involving blocks 101, 102, 305-307, 105 and 107-109) is shown by solid lines. For SRS processing, SRS is transmitted from block 103 to block 304, and block 304 performs channel estimation (as well as various measurements) and user scheduling/pairing using the received SRS signal. Also, block 304 transmits DMRS information (which is used for extracting/calculating, e.g., "non-port reduced DMRS symbols" and "non-port reduced DMRS measurements") to block 305. As part of the UL data processing signal flow, output of block 305 can be sent to block 304 (e.g., sending "non-port reduced DMRS measurements", such as RRM measurements), as well as to block 306. In the example embodiment shown in FIG. 4, the O-RU 10 performs DMRS channel estimation in the block 305 for the main purpose of calculating the beamforming weights.

In the example embodiment of the UL mMIMO O-RAN system shown in FIG. 5, the O-RU 10 (which is a Cat C3 O-RU) has the capability for DMRS extraction, DMRS processing, equalization, and demodulation to improve system performance. The O-RU 10 of FIG. 5 performs demodulation and sends the demodulated signal stream(s) to the O-DU 11. Moreover, the O-RU 10 can send "non-port reduced DMRS measurements" (which are not possible to calculate at the O-DU 11 with high precision) to the O-DU 11 to further improve the system performance.

As shown in FIG. 5, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; block 105, for handling combining and/or digital beamforming matrix application; block 307 for handling channel equalization; and block 308 for handling demodulation. On the O-DU side, the following function modules (blocks) are provided: block 304, for handling channel estimation and user scheduling and/or pairing; block 108, for descrambling, rate matching and FEC decoding; and block 109 for L2 processing. In FIG. 5, the signal flow for SRS processing (starting from block 102 and further involving blocks 103, 304 and 305) is shown by dashed lines, and the signal flow for UL data processing (involving blocks 101, 102, 305-308, 105 and 108-109) is shown by solid lines. For SRS processing, SRS is transmitted from block 103 to block 304, and block 304 performs channel estimation (as well as various measurements) and user scheduling/pairing using the received SRS signal. Also, block 304 transmits DMRS information (which is used for extracting/calculating, e.g., "non-port reduced DMRS symbols" and "non-port reduced DMRS measurements") to block 305. As part of the UL data processing signal flow, output of block 305 can be sent to block 304 (e.g., sending "non-port reduced DMRS measurements", such as RRM measurements), as well as to block 306. In the example embodiment shown in FIG. 5, the O-RU 10 performs DMRS channel estimation in the block 305 for the main purpose of calculating the beamforming weights.

It should be noted that, in the example embodiments of the UL mMIMO O-RAN systems shown in FIG. 3, FIG. 4, and FIG. 5, the O-RU 10 does not transmit "non-port reduced DMRS symbols" to O-DU 11, whereas it can transmit "non-port reduced DMRS measurements".

Although the above-noted advanced PHY capabilities at the O-RU 10 improve the performance of mMIMO O-RAN systems, these advanced PHY capabilities may not be required in all scenarios. For example, when a user equipment (UE) mobility and/or interference level is low in a network, the above-noted advanced PHY features at the O-RU 10 may not improve the performance significantly. Therefore, an example embodiment provides dynamically enabling and/or disabling the above-noted advanced PHY features and exchange related information between the O-RU and the O-DU via the fronthaul. Disabling some or all of the above-discussed advanced PHY features at the O-RU reduces computational complexity and power consumption for the scenarios in which the advanced PHY features do not significantly increase the system efficiency. Moreover, in certain scenarios, the above-discussed advanced PHY features at the O-RU can be turned off to reduce the energy consumption of O-RU even though the network experiences challenging conditions (such as high mobility and interference). In other words, some or all of the above-discussed advanced PHY features at the O-RU can be selectively disabled considering the O-RU energy consumption and throughput performance tradeoff.

In addition to disabling some or all of the above-discussed advanced PHY features, e.g., the transfer of "non-port reduced DMRS measurements", according to example embodiments, the transfer of "non-port reduced DMRS measurements" can be performed intelligently in one or more of the following (transmission) manner(s) to improve both energy and fronthaul bandwidth (FHBW) efficiency: non-delay managed (NDM) manner (instead of delay-managed (DM) manner); on-demand manner (instead of constant throughout in time and frequency); and UE-specific manner (instead of transfer for all UEs). By implementing one or more of these techniques, the computational complexity and/or energy consumption is reduced (on both the O-DU and the O-RU), and FHBW is decreased for mMIMO O-RAN systems using O-RUs with advanced PHY capabilities. Any possible combination of the above-mentioned transmission techniques is valid to transfer the "non-port reduced DMRS measurements". Moreover, to further improve the energy and FHBW efficiency, a subset of antennas can be used for "non-port reduced DMRS measurements". However, if there are no constraints on the network, the "non-port reduced DMRS measurements" can be transmitted in a DM manner for all UEs using all antennas in every time slot and/or physical resource block (PRB).

In addition to the above, to further improve the energy and FHBW efficiency of mMIMO O-RAN systems using O-RUs with advanced PHY capabilities, according to an example embodiment, the "non-port reduced DMRS symbols" can be transferred from the O-RU to the O-DU. In this example embodiment, the O-RU can disable some or all of the above-discussed advanced PHY features (such as DMRS processing, equalization, and demodulation) to reduce the energy consumption at the O-RU, and process the non-port reduced DMRS at the O-DU to improve the performance of mMIMO O-RAN systems. Similar to the above-discussed techniques for the transfer of "non-port reduced DMRS measurements", the "non-port reduced DMRS symbols" can be transferred intelligently to reduce the computational complexity and FHBW consumption as follows: non-delay managed (NDM) manner (instead of DM manner); on-demand manner (instead of constant throughout in time and frequency); and UE-specific manner (instead of transfer for all UEs). Any possible combination of the above-mentioned transmission techniques is valid to transfer the "non-port reduced DMRS symbols". Moreover, to further improve the energy and FHBW efficiency, a subset of antennas can be used for "non-port reduced DMRS symbols". However, if there are no constraints on the network, the "non-port reduced DMRS symbols" can be transmitted in a DM manner for all UEs using all antennas in every time slot and/or PRB .

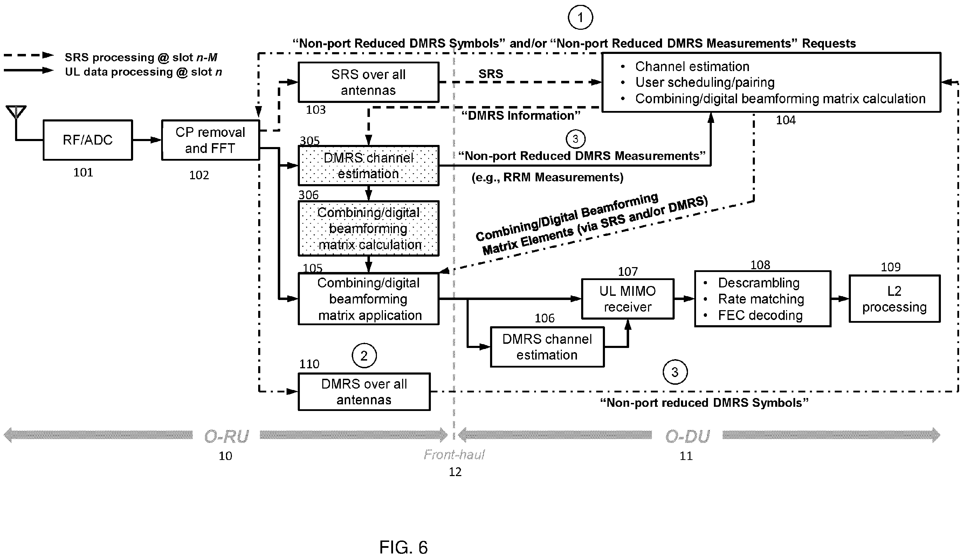

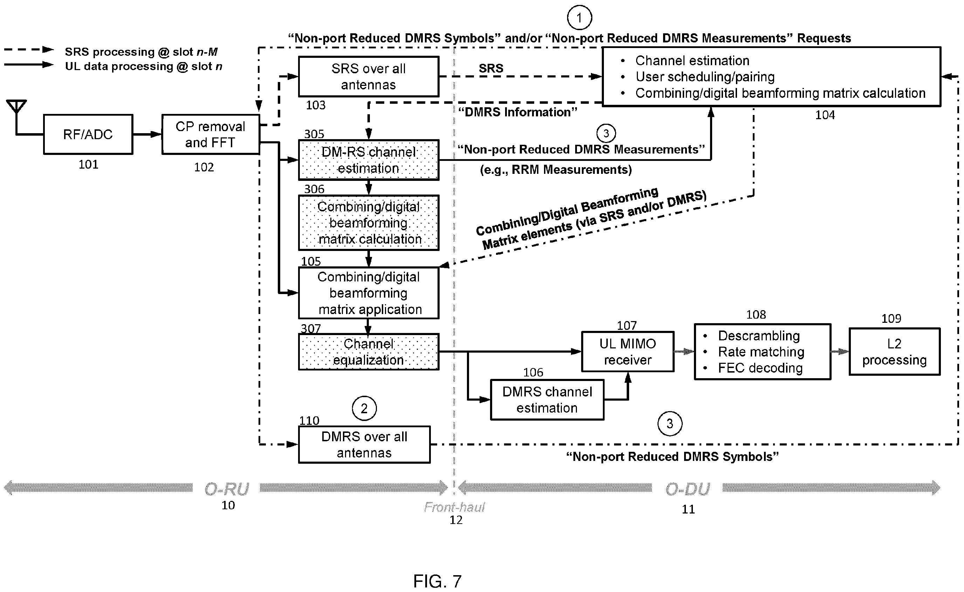

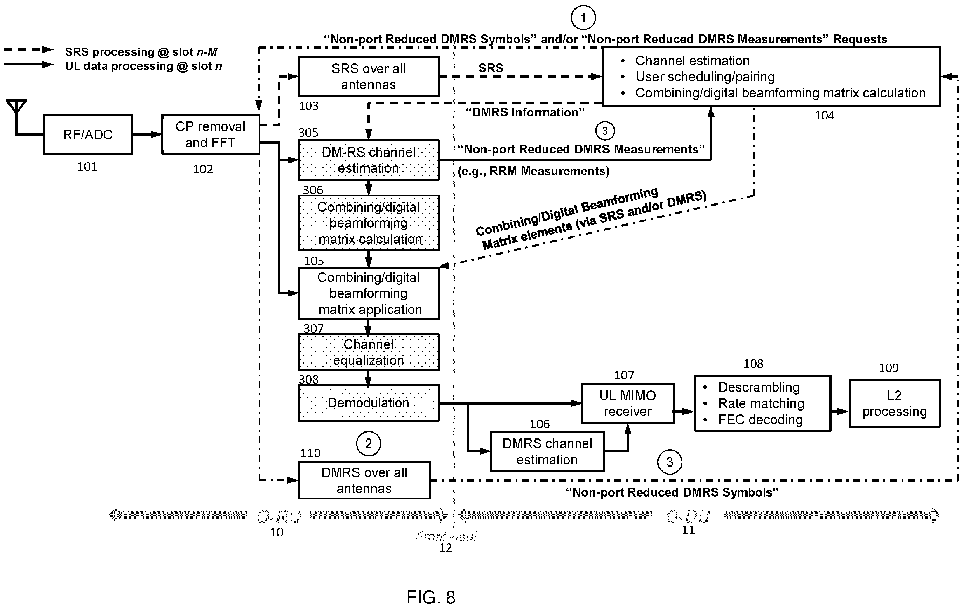

FIGS. 6-8 show block diagrams of example embodiments of UL mMIMO O-RAN systems with an advanced Cat C1 O-RU (FIG. 6), Cat C2 O-RU (FIG. 7), and Cat C3 O-RU (FIG. 8) for improved energy and fronthaul bandwidth (FHBW) efficiency. To enable the proposed energy- and FHBW-efficient mMIMO O-RAN systems shown in FIGS. 6-8, the fronthaul signaling mechanism is improved with new and novel messages. The proposed techniques to improve energy efficiency and FHBW efficiency using the new and novel messages can be implemented in all Cat C1, Cat C2, and Cat C3 O-RU variations (e.g., as shown in FIGS. 6-8) with different PHY layer splits between the O-DU and the O-RU. Example embodiments of messages for "non-port reduced DMRS symbols" and "non-port reduced DMRS measurements" are discussed in detail below in the section entitled "Embodiment 3", along with the messages that selectively enable and/or disable the proposed features (e.g., the use of "non-port reduced DMRS symbols" and "non-port reduced DMRS measurements") to improve energy efficiency and FHBW efficiency.

In each of the embodiments shown in FIGS. 6-8, at least some of the PHY blocks can be disabled both at the O-RU and at the O-DU. Furthermore, the O-RU shown in the embodiments of FIGS. 6-8 has the capability of extracting DMRS and processing it, e.g., DMRS processing includes DMRS-based channel estimation, BFW calculation, equalization, and several PHY measurements based on DMRS symbols. It should be noted that some of the example embodiments have a subset of these PHY capabilities at the O-RU, but having these PHY capabilities at the O-RU does not necessarily imply that they must be executed at the O-RU. Similarly, having these PHY capabilities at the O-DU does not necessarily imply that they must be executed at the O-DU. Some examples are provided below to clarify these ideas.

Low-mobility Scenario: In a high-mobility scenario, it is preferred to have DMRS processing capability at the O-RU because SRS-based beamforming reduces the performance in a high-mobility scenario (for a user equipment (UE)). However, in a low-mobility environment, we can disable DMRS processing capabilities at the O-RU since this feature does not significantly improve throughput performance. In this manner, it is possible to increase the energy efficiency of the system by turning off some features that are not critical. When DMRS processing and related PHY processing (such as equalization) are disabled at the O-RU, these processes need to be performed at the O-DU. In this case, the O-RU and the O-DU can exchange the necessary information (for DMRS processing and related PHY processing) in the fronthaul. For this reason, the current O-DU PHY blocks (e.g., as shown in FIG. 1) are retained in the example embodiments shown in FIGS. 6-8, so that the capability for processing at least some PHY blocks at the O-RU can be selectively disabled, and these PHY blocks processed at the O-DU.

Agnostic DMRS (linear) processing at the O-RU: If no system constraints (e.g., power) exist, DMRS-based beamforming (BF) and (linear) equalization can be performed at the O-RU, and then another equalization can be performed at the O-DU (for further improved performance). In the case of DMRS (linear) processing at the O-RU, it is not necessary to signal to the O-DU that DMRS processing at the O-RU occurs.

In summary, the O-DU and the O-RU can have the capabilities of processing PHY blocks as shown in FIGS. 6-8 (some of which capabilities are redundant between the O-DU and the O-RU). However, having these capabilities does not necessarily imply that they are executed, i.e., these PHY blocks can be selectively enabled and/or disabled, and the necessary information (e.g., for DMRS processing and related PHY processing) can be exchanged between the O-DU and O-RU.

FIG. 6 shows a block diagram of an example embodiment of a UL mMIMO O-RAN system with an advanced Cat C1 O-RU for improved energy and fronthaul bandwidth (FHBW) efficiency. As shown in FIG. 6, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; block 105, for handling combining and/or digital beamforming matrix application; and block 110 for handling DMRS over all antennas. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 6, the signal flow for SRS processing (starting from block 102 and further involving blocks 103, 104 and 305) is shown by dashed lines, and the signal flow for UL data processing (involving blocks 101, 102, 305-306, and 104-109) is shown by solid lines. For SRS processing, SRS is transmitted from block 103 to block 104, and block 104 performs channel estimation (as well as various measurements) and user scheduling/pairing along with the (optional) SRS-based beamforming weights calculation using the SRS signal. Also, block 104 may transmit DMRS information (which is used for extracting/calculating, e.g., "non-port reduced DMRS symbols" and "non-port reduced DMRS measurements") to block 305. As part of the UL data processing signal flow, output of block 305 can be sent to block 104 (e.g., sending "non-port reduced DMRS measurements", such as RRM measurements), as well as to block 306.

In addition to the above, FIG. 6 shows a third signal flow, identified by dot-and-dash lines, for "Non-port Reduced DMRS Symbols" and "Non-port Reduced DMRS Measurements". In this third signal flow, the first step is identified by circled number 1, i.e., block 104 transmits to block 110 (via block 102) "Non-port Reduced DMRS Symbols" request and/or "Non-port Reduced DMRS Measurements" request. In the second step (identified by circled number 2) of this third signal flow, block 110 processes DMRS over all antennas. In the third step (identified by two instances of circled number 3) following the second step, the following are performed: a) block 110 transmits "Non-port Reduced DMRS Symbols" to block 104; and b) block 305 transmits (as part of UL data processing signal flow) "Non-port Reduced DMRS Measurements" (e.g., RRM measurements) to block 104. Block 104 can generate combining and/or digital beamforming matrix elements based on i) the SRS from block 103 and/or ii) the received "Non-port Reduced DMRS Symbols" and/or the "Non-port Reduced DMRS Measurements", and the combining and/or digital beamforming matrix elements are transferred to the block 105 for the combining and/or digital beamforming matrix application.

FIG. 7 shows a block diagram of an example embodiment of a UL mMIMO O-RAN system with an advanced Cat C2 O-RU for improved energy and fronthaul bandwidth (FHBW) efficiency. As shown in FIG. 7, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103, for handling SRS over all antennas; block 305, for handling DMRS channel estimation (based on DMRS information, which is used to extract/calculate, e.g., "non-port reduced DMRS symbols" and "non-port reduced DMRS measurements"); block 306, for handling combining and/or digital beamforming matrix calculation; block 105, for handling combining and/or digital beamforming matrix application; block 307, for channel equalization; and block 110 for handling DMRS over all antennas. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 7, the signal flow for SRS processing (starting from block 102 and further involving blocks 103, 104 and 305) is shown by dashed lines, and the signal flow for UL data processing (involving blocks 101, 102, 305-307, and 104-109) is shown by solid lines. For SRS processing, SRS is transmitted from block 103 to block 104, and block 104 performs channel estimation (as well as various measurements) and user scheduling/pairing along with the (optional) SRS-based beamforming weights calculation using the SRS signal. Also, block 104 may transmit DMRS information (which is used for extracting/calculating, e.g., "non-port reduced DMRS symbols" and "non-port reduced DMRS measurements") to block 305. As part of the UL data processing signal flow, output of block 305 can be sent to block 104 (e.g., sending "non-port reduced DMRS measurements", such as RRM measurements), as well as to block 306.

In addition to the above, FIG. 7 shows a third signal flow, identified by dot-and-dash lines, for "Non-port Reduced DMRS Symbols" and "Non-port Reduced DMRS Measurements". In this third signal flow, the first step is identified by circled number 1, i.e., block 104 transmits to block 110 (via block 102) "Non-port Reduced DMRS Symbols" request and/or "Non-port Reduced DMRS Measurements" request. In the second step (identified by circled number 2) of this third signal flow, block 110 processes DMRS over all antennas. In the third step (identified by two instances of circled number 3) following the second step, the following are performed: a) block 110 transmits "Non-port Reduced DMRS Symbols" to block 104; and b) block 305 transmits (as part of UL data processing signal flow) "Non-port Reduced DMRS Measurements" (e.g., RRM measurements) to block 104. Block 104 can generate combining and/or digital beamforming matrix elements based on i) the SRS from block 103 and/or ii) the received "Non-port Reduced DMRS Symbols" and/or the "Non-port Reduced DMRS Measurements", and the combining and/or digital beamforming matrix elements are transferred to the block 105 for the combining and/or digital beamforming matrix application.

FIG. 8 shows a block diagram of an example embodiment of a UL mMIMO O-RAN system with an advanced Cat C3 O-RU for improved energy and fronthaul bandwidth (FHBW) efficiency. As shown in FIG. 8, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103, for handling SRS over all antennas; block 305, for handling DMRS channel estimation (based on DMRS information, which is used to extract/calculate, e.g., "non-port reduced DMRS symbols" and "non-port reduced DMRS measurements"); block 306, for handling combining and/or digital beamforming matrix calculation; block 105, for handling combining and/or digital beamforming matrix application; block 307, for channel equalization; block 308, for demodulation; and block 110 for handling DMRS over all antennas. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 8, the signal flow for SRS processing (starting from block 102 and further involving blocks 103, 104 and 305) is shown by dashed lines, and the signal flow for UL data processing (involving blocks 101, 102, 305-308, and 104-109) is shown by solid lines. For SRS processing, SRS is transmitted from block 103 to block 104, and block 104 performs channel estimation (as well as various measurements) and user scheduling/pairing along with the (optional) SRS-based beamforming weights calculation using the SRS signal. Also, block 104 may transmit DMRS information (which is used for extracting, e.g., "non-port reduced DMRS symbols" and "non-port reduced DMRS measurements") to block 305. As part of the UL data processing signal flow, output of block 305 can be sent to block 104 (e.g., sending "non-port reduced DMRS measurements", such as RRM measurements), as well as to block 306.

In addition to the above, FIG. 8 shows a third signal flow, identified by dot-and-dash lines, for "Non-port Reduced DMRS Symbols" and "Non-port Reduced DMRS Measurements". In this third signal flow, the first step is identified by circled number 1, i.e., block 104 transmits to block 110 (via block 102) "Non-port Reduced DMRS Symbols" request and/or "Non-port Reduced DMRS Measurements" request. In the second step (identified by circled number 2) of this third signal flow, block 110 processes DMRS over all antennas. In the third step (identified by two instances of circled number 3) following the second step, the following are performed: a) block 110 transmits "Non-port Reduced DMRS Symbols" to block 104; and b) block 305 transmits (as part of UL data processing signal flow) "Non-port Reduced DMRS Measurements" (e.g., RRM measurements) to block 104. Block 104 can generate combining and/or digital beamforming matrix elements based on i) the SRS from block 103 and/or ii) the received "Non-port Reduced DMRS Symbols" and/or the "Non-port Reduced DMRS Measurements", and the combining and/or digital beamforming matrix elements are transferred to the block 105 for the combining and/or digital beamforming matrix application.

Different RUs could have different PHY capabilities, as shown in FIGS. 6, 7, and 8. These RUs are proposed to enable/disable some of their PHY capabilities depending on various needs in this application to achieve energy and fronthaul bandwidth efficiency. These PHY capabilities can be exemplified as, e.g., DMRS channel estimation, combining/digital beamforming matrix calculation, combining/digital beamforming matrix application, channel equalization, and demodulation. Also, during the DMRS channel estimation process, various "non-port reduced DMRS measurements" (e.g., time offset, frequency offset, signal power, etc.) can be extracted and sent to the DU as one of the PHY capabilities. Moreover, "non-port reduced DMRS symbols" can be sent to DU as another PHY capability. In the latter case, the complexity is shifted to the DU from the RU by disabling DMRS processing at the RU.

For example, in FIG. 6, the RU has the capability of obtaining non-port reduced DMRS symbols, performing DMRS channel estimation (including extracting non-port reduced DMRS measurements), combining/digital beamforming matrix calculation, and combining/digital beamforming matrix application. Depending on the conditions, the RU can disable some of these features. This enabling/disabling command can come from the DU or the RU autonomously. For example, the RU can disable DMRS channel estimation and combining/digital beamforming matrix calculation. In this case, it uses the combining/digital beamforming matrix elements received from the DU. The DU has multiple options to calculate the combining/digital beamforming matrix elements. Either the DU uses SRS symbols, or it requests non-port reduced DMRS symbols from the RU and uses them to calculate the combining/digital beamforming matrix elements. In other words, although the RU has the capability of extracting/obtaining non-port-reduced DMRS symbols, this feature can be disabled when it is not needed (e.g., when SRS-based combining/digital beamforming matrix elements are transferred from the DU and used in the RU). Also, it should be pointed out that DU can disable transmitting any combining/digital beamforming matrix elements, and the RU can calculate and apply the combining/digital beamforming matrix elements within itself.

A similar explanation is applicable to FIGS. 7 and 8. Fig.7 illustrates the channel equalization PHY capability at the RU, which can be enabled and disabled, on top of the capabilities in FIG. 6. FIG. 8 illustrates the demodulation PHY capability at the RU, which can be enabled and disabled, on top of the capabilities illustrated in FIG. 7.

It should be noted that when the RU disables some PHY features, it might be required to enable them at the DU. For example, if channel equalization or demodulation is disabled at the RU, it shall be enabled at that O-DU. Also, when channel equalization is disabled at the RU, DMRS channel estimation shall be enabled at the DU since the DU shall enable equalization that requires DMRS channel estimates. In other words, some PHY features can be enabled on both sides, and some PHY features can be enabled on one side (i.e., either DU or RU).

Embodiment 3: In this section, exemplary O-RAN messages (e.g., M-Plane messages and C-Plane messages) to enable energy-efficient and FHBW-efficient uplink performance improvements for mMIMO O-RAN systems are presented.

Example M-Plane Messages: M-Plane refers to non-real-time management operations between the O-DU and the O-RU, and the O-RU can report its capabilities to the O-DU via M-plane. For example, the O-RU can signal its DMRS extraction, DMRS processing (including, but not limited to, channel estimation, beamforming weight calculation, and various measurements), equalization, and demodulation capabilities. In one example embodiment of the present disclosure, the O-RU exposes its ability to support these features to the SMO or the O-RU controller in the *o-ran-module-cap.yang.* One example of the proposed *ru-supported-category* leaf under the *ru-capabilities* structure in the *o-ran-module-cap.yang* can be shown as follows:

```
grouping ru-capabilities {
  description
    "Structure representing set of capabilities.";
  leaf ru-supported-category {
    type enumeration {
      enum CAT_B {
        description
          "Informs that precoding is supported in O-RU for DL"; }
      enum CAT_B_DMRS {
        description
          "Informs that precoding is supported in O-RU for DL and DMRS extraction is
supported in the O-RU for UL";
        }
      enum CAT_B_C1 {
        description
          "Informs that precoding is supported in O-RU for DL and DMRS
extraction/processing is supported in the O-RU for UL";
        }
      enum CAT_B_C2 {
        description
          "Informs that precoding is supported in O-RU for DL and DMRS
extraction/processing and equalization are supported in the O-RU for UL";
        }
      enum CAT_B_C3 {
        description
          "Informs that precoding is supported in O-RU for DL and DMRS
extraction/processing, equalization, and demodulation are supported in the O-RU for
UL";
        }
      description
        "Informs about which category O-RU supports"; }
```

Above examples are given for Cat B (for DL) O-RUs, but similar structures can be provided for Cat A (for DL) O-RUs along with the proposed DMRS, C1, C2, and C3 UL categories as well.

<u>Example C-Plane Messages:</u> In the case the above-discussed uplink performance improvement features for UL mMIMO O-RAN systems are supported by the O-RU and configured by the SMO and/or the O-RU controller, the O-DU appends the UL C-plane messages sent in the DL to the O-RU with one or multiple section extension(s). For example, these C-plane messages can include DMRS configuration parameters (e.g., the parameters listed in Table 1 and Table 2 shown below in the subsequent sections) to enable the O-RU to extract DMRS information.

In this section, DMRS precoding and mapping to physical resources will be presented. The orthogonality of the DMRS sequences that are allocated to the different antenna ports is achieved by multiplexing in time, frequency, and code domains. To implement this, i) the DMRS sequence is multiplied with the orthogonal cover codes in time and frequency domains (i.e., $w_t(k)$ and $w_f(k)$, respectively), and ii) shifts in the frequency domain are included to support more antenna ports. The DMRS sequence, r(m) is mapped to an intermediate quantity $\tilde{a}_{k,l}^{(\tilde{p}_j,\mu)}$ as follows:

$$\tilde{a}_{k,l}^{(\tilde{p}_j,\mu)} = w_f(k')\, w_t(l')\, r(2n + k')$$
$$k = \begin{cases} 4n + 2k' + \Delta & Configuration\,Type\,1 \\ 6n + k' + \Delta & Configuration\,Type\,2 \end{cases}$$
$$k' = 0,1$$
$$l = \bar{l} + l'$$
$$n = 0,1,\dots$$
$$j = 0,1,\dots,v - 1$$

where $w_f(k')$, $w_t(l')$, and $\Delta$ are defined by Tables 6.4.1.1.3-1 and Tables 6.4.1.1.3-2 in TS 38.211. Also, $\tilde{p}_j$ represents the antenna port for transmission layer $j$. However, discrete Fourier transform-spread-orthogonal frequency division multiplexing (DFT-s-OFDM) supports only single-layer transmission, and $j$ is equal to 0 when transform-precoding is enabled.

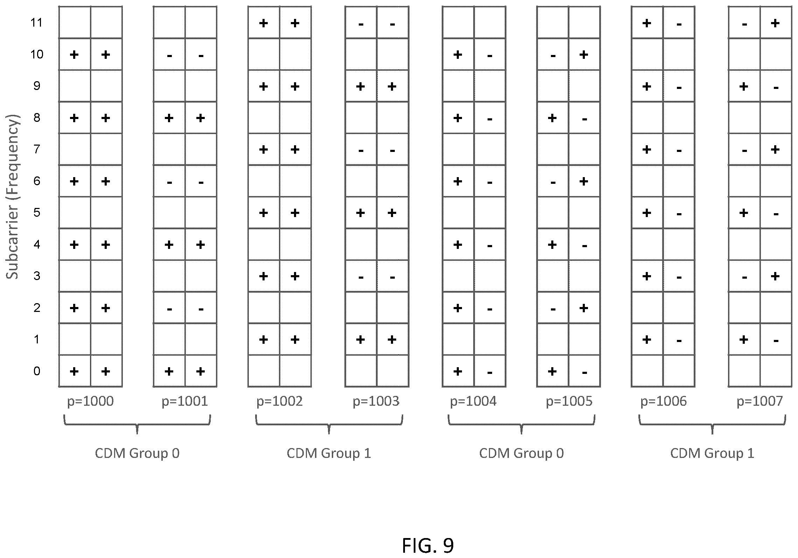

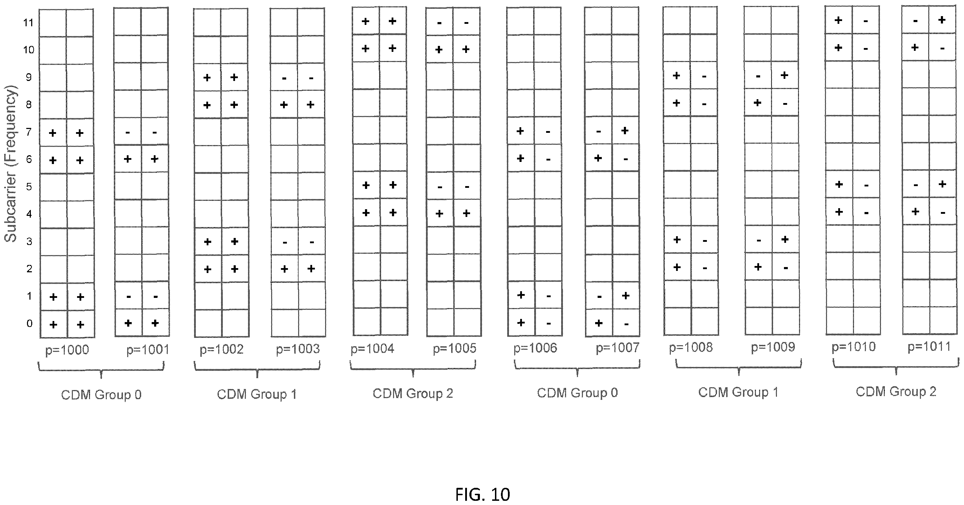

DMRS configuration type determines the DMRS density in the frequency domain, which also impacts the available number of orthogonal sequences. DMRS configuration Type 1 has a higher density in the frequency domain and provides a more accurate channel estimation. On the other hand, DMRS configuration Type 2 has a lower density in the frequency domain and allows supporting more antenna ports. Type 1 can support up to 8 antenna ports, whereas Type 2 can support up to 12 antenna ports. These are illustrated in FIG. 9 (DMRS configuration parameters for DMRS configuration Type 1 supporting 8 antenna ports) and FIG. 10 (DMRS configuration parameters for DMRS configuration Type 2 supporting 12 ports), along with the associated mapping and orthogonal cover codes obtained from Tables 6.4.1.1.3-1 and Tables 6.4.1.1.3-2 in TS 38.211. In FIGS. 9 and 10, the following acronyms are shown: port (p); and code division multiplexing (CDM).

The reference point for k depends on the waveform type. For Cyclic Prefix-Orthogonal Frequency Division Multiplexing (CP-OFDM), i.e., when transform precoding is disabled, k is subcarrier 0 in the common resource block. On the other hand, for DFT-s-OFDM, i.e., when transform precoding is enabled, k is subcarrier 0 of the lowest-numbered RB of the scheduled PUSCH allocation.

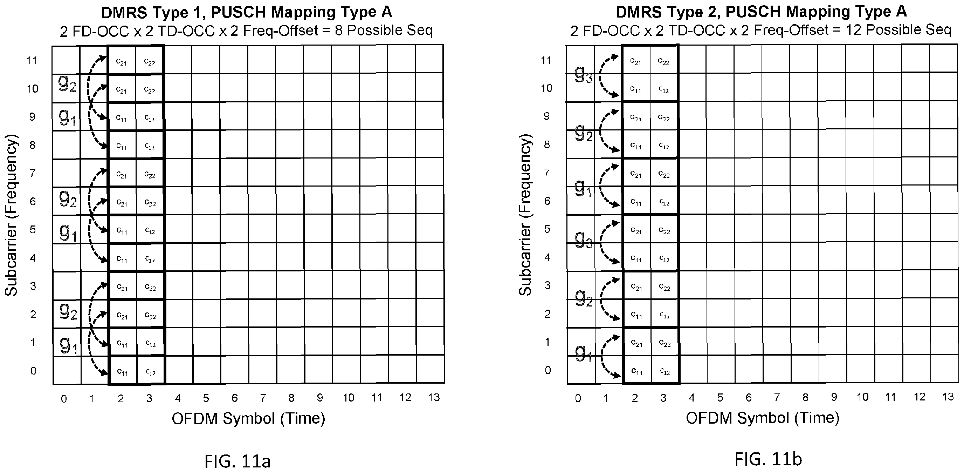

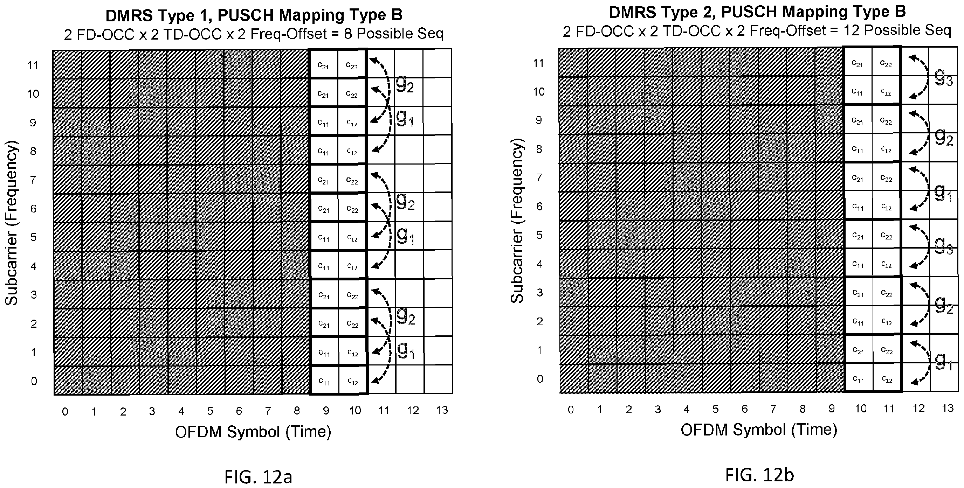

The reference point of $l$ and the position of the first DMRS symbol ($l_0$) depend on the PUSCH mapping type and activation of the frequency hopping scheme. For PUSCH Mapping Type A, $l$ is defined relative to the start of the slot if frequency hopping is disabled, and it is defined relative to the start of each hop if frequency hopping is enabled. $l_0$ is indicated by *dmrs - Type A - Position* parameter, and it refers to either the third or fourth OFDM symbol in a slot. On the other hand, for PUSCH Mapping Type B, $l$ is defined relative to the start of the scheduled PUSCH resources if frequency hopping is disabled, and it is defined relative to the start of each hop if frequency hopping is enabled. In this case, $l_0$ equals to 0, i.e., it refers to the first symbol in the scheduled data symbol duration. Exemplary DMRS mappings are illustrated in FIGS. 11a and 11b for PUSCH Mapping Type A, and in FIGS. 12a and 12b for PUSCH Mapping Type B. FIG. 11a illustrates DMRS configuration parameters for an example DMRS mapping for DMRS Type 1, PUSCH mapping Type A. FIG. 11b illustrates DMRS configuration parameters for an example DMRS mapping for DMRS Type 2, PUSCH mapping Type A. FIG. 12a illustrates DMRS configuration parameters for an example DMRS mapping for DMRS Type 1, PUSCH mapping Type B. FIG. 12b illustrates DMRS configuration parameters for an example DMRS mapping for DMRS Type 2, PUSCH mapping Type B. In FIGS. 11a, 11b, 12a and 12b, the following acronyms are shown (among others): group 1 (g1); group 2 (g2); group 3 (g3); frequency domain orthogonal covering coding (FD-OCC); and time domain orthogonal covering coding (TD-OCC).

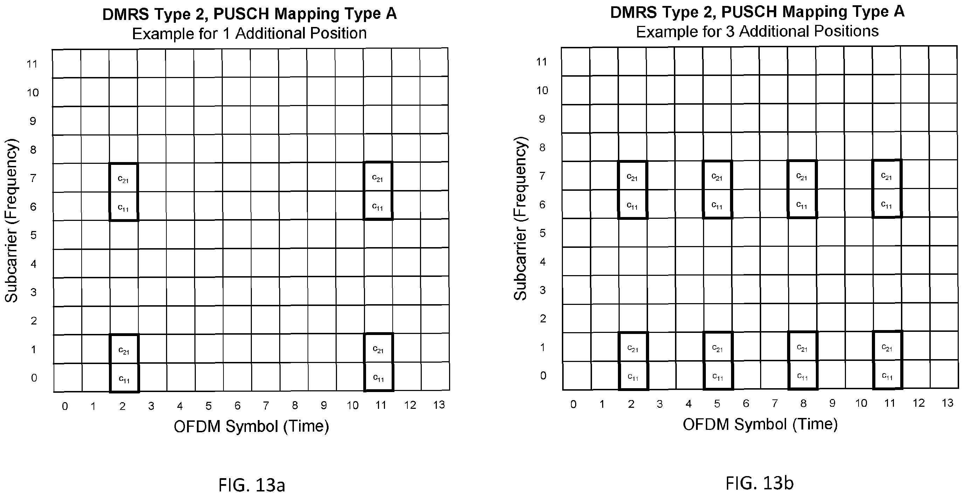

The position(s) of the DMRS symbols is provided by $\bar{l}$ parameter, and it depends on the PUSCH mapping type, activation of the frequency hopping scheme, and the number of additional DMRS symbols. Up to 4 DMRS symbols (i.e., up to 3 additional positions) in a slot are possible for high mobility scenarios. Exemplary DMRS allocations with additional positions (e.g., for high mobility case) are presented in FIGS. 13a and 13b. FIG. 13a illustrates DMRS configuration parameters for an example DMRS allocations with one additional position, e.g., for a high-mobility case, for DMRS Type 2, PUSCH mapping Type A. FIG. 13b illustrates DMRS configuration parameters for an example DMRS allocations with three additional positions, e.g., for a high-mobility case, for DMRS Type 2, PUSCH mapping Type A. The position(s) of the DMRS symbols ($\bar{l}$), the time-domain index ($l'$), and the supported antenna ports $\tilde{p}_j$ are provided by Tables 6.4.1.1.3-3 through 6.4.1.1.3-6 in TS 38.211.

In the following step, the intermediate quantity, $\tilde{a}_{k,l}^{(\tilde{p}_j,\mu)}$, is precoded with W, multiplied with the amplitude scaling factor $\beta_{PUSCH}^{DMRS}$ and mapped to the physical resources as follows:

$$\begin{bmatrix} a_{k,l}^{(0,\mu)}(m) \\ \vdots \\ a_{k,l}^{(p_{v-1},\mu)}(m) \end{bmatrix} = \beta_{PUSCH}^{DMRS} \, W \begin{bmatrix} \tilde{a}_{k,l}^{(0,\mu)}(m) \\ \vdots \\ \tilde{a}_{k,l}^{(\tilde{p}_{v-1},\mu)}(m) \end{bmatrix}$$

where $\beta_{PUSCH}^{DMRS} = 10^{-\frac{\tilde{\beta}_{DMRS}}{20}}$ and $\beta_{DMRS}$ is given by Table 6.2.2-1 in TS 38.214. The required $\beta_{DMRS}$ value is signaled with the number of DMRS CDM groups without data parameter. In addition, W is given by Table 6.3.1.5-1 to Table 6.3.1.5.-7 in TS 38.211. The required precoding matrix is signaled through the TPMI index parameter.

Essential DMRS configuration-related parameters are given in Table 1 below, and they are included in the C-plane message to enable the O-RU to extract DMRS information. Also, Table 2 below provides an example look-up table for the DMRS granularity in the time, frequency, and spatial domains to improve fronthaul bitrate efficiency. Each indicator (i.e., $N_1$ to $N_8$) can be set to a specified time (T), frequency (F), and spatial (S) resource set.

**Table 1: DMRS configuration-related parameters**

| Parameter | Brief Description | Value Range |
|---|---|---|
| dmrs-Type | DMRS Configuration Type | {1,2} |

(continued)

| Parameter | Brief Description | Value Range |
|---|---|---|
| dmrs-maxLength | Single Symbol or Double Symbol | {1,2} |
| dmrs-TypeA-Position | DMRS Start Pos for Type A | {pos2,pos3} |
| dmrs-AdditionalPosition | Additional DMRS Position | {0,1,2,3} |
| $\tilde{p}$ | Antenna Port Index | {0,1, ... ,11} |

**Table 2: An example look-up table for the DMRS granularity in the time, frequency, and spatial domains**

| Bitfield | DMRS Granularity |
|---|---|
| 000 | $N_1$ |
| 001 | $N_2$ |
| 010 | $N_3$ |
| 011 | $N_4$ |
| 100 | $N_5$ |
| 101 | $N_6$ |
| 110 | $N_7$ |
| 111 | $N_8$ |

In this section, an example section extension type, Section Extension Type 21 (ExtType=21), is described, which section extension type provides section description for DMRS configuration parameters. This example section extension enables the O-DU to provide the DMRS configuration parameters needed at the O-RU to extract DMRS information. Table 3 below shows the format of Section Extension Type 21, and the relevant parameters are defined below the table.

**Table 3: Section Extension Type 21**

| ef | extType = 0x15 | | | | | | 1 | Octet N |
|---|---|---|---|---|---|---|---|---|
| extL en | | | | | | | 1 | N+1 |
| dmrs-Type | maxLength | dmrs-TypeA-Position | dmrs-AdditionalPosition | TP | reserved | reserved | 1 | N+2 |
| | | $\tilde{p}$ | | NDM-DMRS-Granularity | | reserved | 1 | N+3 |

**dmrs-Type**

Description: This parameter is used to indicate the "DMRS Configuration Type" parameter.
Value range: {00b: Type-1; 01b: Type-2}.
Type: binary.
Field length: 1 bit.
Default Value: 0

**dmrs-maxLength**

Description: This parameter is used to indicate the "DMRS maximum length".
Value range: {00b: Single Symbol; 01b: Double Symbol}.

Type: binary.
Field length: 1 bit.
Default Value: 0

**dmrs-TypeA-Position**

Description: This parameter is used to indicate the "DMRS start position for PUSCH mapping Type A".
Value range: {00b: pos2; 01b: pos3}.
Type: binary.
Field length: 1 bit.
Default Value: 0

**dmrs-AdditionalPosition**

Description: This parameter is used to indicate the additional DMRS position.
Value range: {00b: 0; 01b: 1; 10b: 2; 11b: 3}.
Type: unsigned integer.
Field length: 2 bits.
Default Value: 00

**TP**

Description: This parameter is used to indicate if "transform precoding" is enabled or disabled.
Value range: {00b: Disabled; 01b: Enabled}.
Type: binary.
Field length: 1 bit.
Default Value: 0

**$\overline{p}$**

Description: This parameter is used to indicate antenna port index.
Value range: {0000b:0 to 1011b: 11}.
Type: unsigned integer.
Field length: 4 bits.
Default Value: 0000

**DMRS-Granularity**

Description: This parameter is used to indicate DMRS granularity in time/frequency/spatial domains.
Value range: {000b: 0; 001b: 1; 010b: 2; 011b: 3, 100b: 4; 101b: 5; 110b: 6; 111b: 7}.
Type: unsigned integer.
Field length: 3 bits.
Default Value: 000

C-plane messages can enable and/or disable uplink-performance-improvement features dynamically and provide these features' configurations. For example, the following information can be signaled from O-DU to O-RU:

1) Enabling transfer of "Non-port reduced DMRS symbols" (along with their resolutions in time/frequency/spatial domains).

2) Enabling transfer of "Non-port reduced DMRS measurements" (along with their resolutions in time/frequency/-spatial domains) and selection of desired "non-port reduced DMRS measurement" type(s).

3) Transmission type of "non-port reduced DMRS symbols" and "non-port reduced DMRS measurements" (e.g., DM versus NDM, and/or UE-specific versus not UE-specific).

4) Enabling the execution of selected PHY operation(s) at the O-RU, such as DMRS processing (including, but not limited to, channel estimation, beamforming weight calculation, and measurements), equalization, and demodulation.

5) Configuration of selected PHY operation(s) at O-RU, e.g., channel estimation type, beamforming methods, supplementary information to enable these PHY operations, etc.

"Non-port reduced DMRS symbols" and "non-port reduced DMRS measurements" at the O-RU can be transferred to the O-DU via C-plane messages when requested. In addition, they can be transferred to O-DU in the U-plane, similar to SRS. In-phase (I) and quadrature (Q) samples of the DMRS symbols and/or measurements are appended after the header information.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. For example, although the example embodiment of the present disclosure have been presented in the context of O-RAN 7-2x-based UL mMIMO systems, the present disclosure is equally applicable to any MIMO and/or mMIMO O-RAN systems with O-RUs that have advanced PHY capabilities. Additional modifications/variations encompassed by the present disclosure include, but are not limited to, the following:

1) Varying the time-domain sparsity of "non-port-reduced DMRS symbols" (e.g., use fewer DMRS symbols) and "non-port-reduced DMRS measurements".

2) Varying the frequency-domain sparsity of "non-port-reduced DMRS symbols" (e.g., transfer one DMRS resource element (RE) per physical resource block (PRB) rather than all the DMRS REs) and "non-port-reduced DMRS measurements".

3) Varying the dimension of "non-port-reduced DMRS symbols" (e.g., select a subset of the TRX ports rather than the full TRX ports of the RU) and "and "non-port-reduced DMRS measurements".

4) Varying the UE-specific and on-demand-based signaling arrangement of (including semi-persistent, periodic, and aperiodic transmissions) "non-port-reduced DMRS symbol" and "non-port-reduced DMRS measurement" transfers/processes.

5) Varying the enabled/disabled other PHY blocks (e.g., whitening filters and dimensionality reduction operations) both at O-RU and O-DU to improve energy and FHBW efficiency.

Therefore, it is intended that the present disclosure not be limited to the particular embodiment(s) disclosed as the best mode contemplated, but that the disclosure will include all embodiments falling within the scope of the appended claims.

For the sake of completeness of disclosure, the following lists of acronyms and definitions are provided:

## ACRONYMS:

- 3GPP: Third generation partnership project
- BS: Base Station
- CA: Carrier Aggregation
- CAPEX: Capital Expenditure
- CBRS: Citizens Broadband Radio Services

- CC: Component carrier
- COTS: Commercial off-the-shelf
- CP: cyclic prefix
- C-plane: Control plane
- C-RAN: cloud radio access network
- CU: Central unit
- DCI: downlink control indicator
- DL: downlink
- DU: Distribution unit
- eAxC ID: Extended Antenna-Carrier identifier: a data flow for a single antenna (or spatial stream) for a single carrier in a single sector.
- eNB: Evolved Node B (applies to LTE)
- FDD: Frequency-division duplex
- FEC: forward error correction
- FH: Fronthaul
- FFT: Fast Fourier Transform
- gNB: gNodeB (applies to NR)
- iFFT: inverse Fast Fourier Transform
- IQ: in-phase/quadrature
- HARQ: hybrid automatic repeat request
- LTE: long term evolution
- LTE-A: LTE Advanced
- M-plane: Management plane
- MCS: modulation and coding scheme
- MIMO: multiple input, multiple output
- MMSE-IRC: Minimum mean square error - interference rejection combining
- MMSE-MRC: Minimum mean square error - maximum-ratio combining
- mmWave: millimeter wave
- MNO: Mobile network operator
- NR: New radio
- OAM: Operation and management
- O-DU: O-RAN Distributed Unit
- O-RU: O-RAN Radio Unit
- O-RAN: Open RAN (Basic O-RAN specifications are prepared by the O-RAN alliance)
- OPEX: Operating Expense
- PBCH: Physical Broadcast Channel
- PCFICH: Physical Control Format Indicator Channel
- PDCCH: Physical downlink Control Channel
- PDCP: Packet Data Convergence Protocol
- PDSCH: physical downlink shared channel
- PHICH: Physical Hybrid ARQ Indicator Channel
- PHY: physical layer
- LPHY: lower physical layer
- UPHY: upper physical layer
- PUCCH: Physical Uplink Control Channel
- PUSCH: Physical Uplink Shared Channel
- QAM: quadrature amplitude modulation
- QPSK: Quadrature Phase Shift Keying
- RACH: random access channel
- PRACH: physical random access channel
- RF: radio frequency interface
- RLC: Radio Link Control
- RRC: Radio Resource Control
- RRM: Radio resource management
- RRU: Remote radio unit
- RU: Radio Unit
- RS: reference signal
- RSSI: received signal strength indicator

∘ RPC: Remote procedure call
∘ SMO: Service Management and Orchestration
∘ S-plane: Synchronization plane
∘ SCell: Secondary cell
∘ SIMO: single input, multiple output
∘ SINR: signal-to-interference-plus-noise ratio
∘ SRS: Sounding reference signal
∘ SSS: Secondary Synchronization Signal
∘ TB: transport block
∘ TTI: Transmission Time Interval
∘ TDD: Time division duplex
∘ U-plane: User plane
∘ UCI: Uplink Control Information
∘ UE: user equipment
∘ UL: uplink
∘ UL DMRS: uplink demodulation reference signal
∘ ULSCH: Uplink Shared Channel
∘ vBBU: Virtualized baseband unit
∘ VNF: Virtual Network Function

**DEFINITIONS:**

∘ Channel: the contiguous frequency range between lower and upper frequency limits.
∘ C-plane: Control Plane: refers specifically to real-time control between O-DU and O-RU, and should not be confused with the UE's control plane
∘ DL: DownLink: data flow towards the radiating antenna (generally on the LLS interface)
∘ LLS: Lower Layer Split: logical interface between O-DU and O-RU when using a lower layer (intra-PHY based) functional split.
∘ M-Plane: Management Plane: refers to non-real-time management operations between the O-DU and the O-RU
∘ O-CU: O-RAN Control Unit - a logical node hosting PDCP, RRC, SDAP and other control functions
∘ O-DU: O-RAN Distributed Unit: a logical node hosting RLC/MAC/High-PHY layers based on a lower layer functional split.
∘ O-RU: O-RAN Radio Unit: a logical node hosting Low-PHY layer and RF processing based on a lower layer functional split. This is similar to 3GPP's "TRP" or "RRH" but more specific in including the Low-PHY layer (FFT/iFFT, PRACH extraction).
∘ OTA: Over the Air
∘ S-Plane: Synchronization Plane: refers to traffic between the O-RU or O-DU to a synchronization controller which is generally an IEEE 1588 Grand Master (however, Grand Master functionality may be embedded in the O-DU).
∘ U-Plane: User Plane: refers to IQ sample data transferred between O-DU and O-RU
∘ UL: UpLink: data flow away from the radiating antenna (generally on the LLS interface)

**Claims**

1. A method for optimizing uplink performance of Open Radio Access Network (O-RAN) system in at least one of an energy-efficient and fronthaul-bandwidth-efficient manner, said O-RAN system implementing O-RAN split option 7-2x-based uplink (UL) multiple-input multiple-output (MIMO) operation, and said method comprising:

selectively obtaining, by a radio unit (RU) of the O-RAN system, at least one of non-port reduced DMRS symbols and non-port reduced DMRS measurements, wherein the non-port reduced DMRS symbols are DMRS symbols from multiple antenna streams before digital beamforming operation, and the non-port reduced DMRS measurements are measurements derived from the non-port reduced DMRS symbols; and
selectively utilizing, by at least one of the RU and a distributed unit (DU) of the O-RAN system, at least one of the non-port reduced DMRS symbols and the non-port reduced DMRS measurements to mitigate performance degradation of the O-RAN 7-2x-based UL MIMO in conditions leading to performance degradation.

**2.** The method according to claim 1, further comprising:

> transmitting, by the RU, the non-port reduced DMRS measurements to the DU; and
> transmitting, by the DU, at least one of combining and digital beamforming matrix elements to the RU for at least one of combining and digital beamforming matrix application.

**3.** The method according to claim 2, further comprising:
dynamically deselecting the capability of the RU for at least one of obtaining the non-port reduced DMRS symbols and transmitting the non-port reduced DMRS measurements to the DU.

**4.** The method according to claim 2, further comprising at least one of:

> i) sending, by the DU, DMRS information used for obtaining at least one of the non-port reduced DMRS symbols and the non-port reduced DMRS measurements; and
> ii) transmitting, by the RU, the non-port reduced DMRS symbols to the DU.

**5.** The method according to claim 1, further comprising:

> performing, by the RU, a first DMRS channel estimation based on the non-port reduced DMRS symbols; and
> performing, by the RU, calculation of at least one of combining and digital beamforming matrix.

**6.** The method according to claim 1, further comprising:
transmitting, by the DU, at least one of combining and digital beamforming matrix elements to the RU for at least one of combining and digital beamforming matrix application.

**7.** The method according to claim 1, further comprising:
at least one of:

> transmitting, by the RU, the non-port reduced DMRS measurements to the DU; and
> performing, by the DU, a second DMRS channel estimation.

**8.** The method according to claim 5, further comprising:
at least one of:

> transmitting, by the RU, the non-port reduced DMRS measurements to the DU; and
> performing, by the DU, a second DMRS channel estimation.

**9.** A system for optimizing uplink performance of Open Radio Access Network (O-RAN) in at least one of an energy-efficient and fronthaul-bandwidth-efficient manner, said O-RAN implementing O-RAN split option 7-2x-based uplink (UL) multiple-input multiple-output (MIMO) operation, said system comprising:

> a radio unit (RU) of the O-RAN configured to selectively obtain at least one of non-port reduced DMRS symbols and non-port reduced DMRS measurements, wherein the non-port reduced DMRS symbols are DMRS symbols from multiple antenna streams before digital beamforming operation, and the non-port reduced DMRS measurements are measurements derived from the non-port reduced DMRS symbols; and
> a distributed unit (DU) of the O-RAN configured to implement the O-RAN 7-2x-based UL MIMO operation in conjunction with the RU;
> wherein at least one of the RU and the DU is configured to selectively utilize at least one of the non-port reduced DMRS symbols and the non-port reduced DMRS measurements to mitigate performance degradation of the O-RAN 7-2x-based UL MIMO in conditions leading to performance degradation.

**10.** The system according to claim 9, wherein:

> the RU is configured to transmit the non-port reduced DMRS measurements to the DU; and
> the DU is configured to transmit at least one of combining and digital beamforming matrix elements to the RU for at least one of combining and digital beamforming matrix application.

**11.** The system according to claim 10, wherein:

the RU is configured to dynamically deselect the capability of the RU for at least one of obtaining the non-port reduced DMRS symbols and transmitting the non-port reduced DMRS measurements to the DU.

12. The system according to claim 10, wherein:

    i) the DU is configured to send DMRS information used for obtaining at least one of the non-port reduced DMRS symbols and the non-port reduced DMRS measurements; and
    ii) the RU is configured to transmit the non-port reduced DMRS symbols to the DU.

13. The system according to claim 9, wherein:
    the RU is configured to perform i) a first DMRS channel estimation based on the non-port reduced DMRS symbols, and ii) a calculation of at least one of combining and digital beamforming matrix.

14. The system according to claim 9, wherein:
    the DU is configured to transmit at least one of combining and digital beamforming matrix elements to the RU for at least one of combining and digital beamforming matrix application.

15. The system according to claim 9, wherein at least one of:

    i) the RU is configured to transmit the non-port reduced DMRS measurements to the DU; and
    ii) the DU is configured to perform a second DMRS channel estimation.

16. The system according to claim 13, wherein at least one of:

    i) the RU is configured to transmit the non-port reduced DMRS measurements to the DU; and
    ii) the DU is configured to perform a second DMRS channel estimation.

**Legend:**
- - - ► SRS processing @ slot *n-M*
——► UL data processing @ slot *n*

**SRS over all antennas** — 103

**SRS** → Channel estimation · User scheduling/pairing · Combining/digital beamforming matrix calculation — 104

**RF/ADC** — 101

**CP removal and FFT** — 102

**Combining/Digital Beamforming matrix elements**

**Combining/Digital Beamforming matrix application** — 105

**UL MIMO receiver** — 107

**DMRS channel estimation** — 106

· Descrambling · Rate matching · FEC decoding — 108

**L2 processing** — 109

*O-RU* — 10

*Front-haul* — 12

*O-DU* — 11

EP 4 496 237 A1

FIG. 1
(PRIOR ART)

FIG. 2

- - - ▶ SRS processing @ slot *n-M*
——▶ UL data processing @ slot *n*

**103**
SRS over all antennas

**SRS**

**304**
- Channel estimation
- User scheduling /pairing

"DMRS Information"

RF/ADC
**101**

CP removal and FFT
**102**

**305**
DMRS channel estimation

"Non-port Reduced DMRS Measurements"
(e.g., RRM Measurements)

**306**
Combining/digital beamforming matrix calculation

**105**
Combining/digital beamforming matrix application

**107**
UL MIMO receiver

**108**
- Descrambling
- Rate matching
- FEC decoding

**109**
L2 processing

**106**
DMRS channel estimation

*O-RU*
**10**

*Front-haul*
**12**

*O-DU*
**11**

FIG. 3

FIG. 4

FIG. 5

FIG. 6

**"Non-port Reduced DMRS Symbols" and/or "Non-port Reduced DMRS Measurements" Requests** ①

- - - ▶ SRS processing @ slot *n-M*
—— ▶ UL data processing @ slot *n*

RF/ADC
101

CP removal and FFT
102

SRS over all antennas
103

SRS

- Channel estimation
- User scheduling/pairing
- Combining/digital beamforming matrix calculation
104

**"DMRS Information"**

305
DM-RS channel estimation

③ **"Non-port Reduced DMRS Measurements"** (e.g., RRM Measurements)

306
Combining/digital beamforming matrix calculation

Combining/Digital Beamforming Matrix elements (via SRS and/or DMRS)

105
Combining/digital beamforming matrix application

307
Channel equalization

107
UL MIMO receiver

106
DMRS channel estimation

108
- Descrambling
- Rate matching
- FEC decoding

109
L2 processing

110 ②
DMRS over all antennas

③

**"Non-port Reduced DMRS Symbols"**

◀══ O-RU ══▶
10

◀══ Front-haul ══▶
12

◀══ O-DU ══▶
11

FIG. 7

FIG. 8

FIG. 9

FIG. 10

## DMRS Type 1, PUSCH Mapping Type A
### 2 FD-OCC x 2 TD-OCC x 2 Freq-Offset = 8 Possible Seq

FIG. 11a

## DMRS Type 2, PUSCH Mapping Type A
### 2 FD-OCC x 2 TD-OCC x 2 Freq-Offset = 12 Possible Seq

FIG. 11b

EP 4 496 237 A1

FIG. 12b

FIG. 12a

DMRS Type 2, PUSCH Mapping Type A
Example for 1 Additional Position

FIG. 13a

DMRS Type 2, PUSCH Mapping Type A
Example for 3 Additional Positions

FIG. 13b

EP 4 496 237 A1

Europäisches Patentamt

European Patent Office

Office européen des brevets

# EUROPEAN SEARCH REPORT

**Application Number**

EP 24 18 9653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/155864 A1 (ABDOLI JAVAD [US] ET AL) 18 May 2023 (2023-05-18) * paragraphs [0005] - [0014], [0070] - [0077], [0143]; figures 3-5 * | 1-16 | INV. H04B7/08 H04L25/02 |
| | ----- | | |
| X | US 2022/021423 A1 (AHMED WESSAM AFIFI [US] ET AL) 20 January 2022 (2022-01-20) * paragraphs [0005] - [0009], [0080] - [0085], [0152] - [0160]; figure 5 * | 1-16 | |
| | ----- | | |

**TECHNICAL FIELDS SEARCHED (IPC)**

H04B
H04L

The present search report has been drawn up for all claims

| Place of search | Date of completion of the search | Examiner |
|---|---|---|
| Munich | 9 December 2024 | El Hajj Shehadeh, Y |

EPO FORM 1503 03.82 (P04C01)

**ANNEX TO THE EUROPEAN SEARCH REPORT**
**ON EUROPEAN PATENT APPLICATION NO.**

EP 24 18 9653

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | Publication date | Patent family member(s) | | Publication date |
|---|---|---|---|---|
| US 2023155864 A1 | 18-05-2023 | EP | 4152639 A1 | 22-03-2023 |
| | | US | 2023155864 A1 | 18-05-2023 |
| US 2022021423 A1 | 20-01-2022 | EP | 3955470 A2 | 16-02-2022 |
| | | US | 2022021423 A1 | 20-01-2022 |

EPO FORM P0459

For more details about this annex : see Official Journal of the European Patent Office, No. 12/82